Europäisches Patentamt

**European Patent Office**

**Office européen des brevets**

(19)

(⑪) Publication number: **0 003 852**

**B1**

(12) **EUROPEAN PATENT SPECIFICATION**

(45) Date of publication of patent specification: **25.11.81**

(21) Application number: **79200034.1**

(22) Date of filing: **19.01.79**

(⑤) Int. Cl.³: **H 04 N 5/14, G 01 S 3/78, G 01 S 7/06, G 01 S 7/28**

(㊹) Threshold selection circuit suitable for a processing unit for the processing of video signals from an angle tracking device.

(30) Priority: **16.02.78 NL 7801727**

(43) Date of publication of application:
**05.09.79 Bulletin 79/18**

(45) Publication of the grant of the European patent:
**25.11.81 Bulletin 81/47**

(84) Designated Contracting States:
**BE CH DE FR GB IT NL SE**

(56) References cited:
**FR - A - 2 328 970**
**US - A - 3 495 081**
**US - A - 3 621 129**
**US - A - 3 710 011**
**US - A - 3 777 056**
**US - A - 3 790 706**
**US - A - 4 044 352**

(⑦③) Proprietor: **HOLLANDSE SIGNAALAPPARATEN B.V.**
**Zuidelijke Havenweg 40 P.O. Box 42**
**NL-7550 GD Hengelo (NL)**

(㉒) Inventor: **Los, Lindert**
**Holterstraatweg 39**
**Rijssen (NL)**

(㉔) Representative: **Kradolfer, Theodorus Albertus Clemens, Drs. et al,**
**Patent Department Hollandse Signaalapparaten B.V. P.O. Box 42**
**NL-7550 GD Hengelo (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Threshold selection circuit suitable for a processing unit for the processing of video signals from an angle tracking device.

The invention relates to a threshold selection circuit suitable for a processing unit for the processing of video signals obtained from an angle tracking device, such as a television angle tracking device.

Only video signals which exceed a given threshold, derived from a threshold selection circuit, are selected for application to the processing unit: optimal results are thereby obtained if the threshold level is set just above the black level of the video signals supplied.

Such a threshold selection circuit is commonly known and may for instance consist of a manually adjustable resistance divider circuit. Further it may comprise a manually controlled stepping switch to select the threshold from a number of discrete voltage levels.

Moreover, US—A—3495081 deals with a real time median computing system having a plurality of comparators with different voltage reference levels to reduce radar cross-section data of targets to median values.

A disadvantage of the above selection circuit is that the threshold selection occurs manually, encumbering the acquisition of optimal results. This disadvantage is particularly felt when, through an abrupt jump in the average intensity level of the video signals, a rapid adjustment of the threshold level is required.

It is therefore an object of the present invention to provide a solution to eliminate this disadvantage.

According to the invention, the threshold selection circuit as set forth in the opening paragraph is provided with a number (N) of video integrators, which are fed with video signals and which are active above certain threshold levels decreasing in numerical order, and with a weighting network, connected to the video integrators, for selecting and assigning the threshold of the lowest numbered video integrator for the processing unit, of which video integrator the output signal does not exceed a fixed fraction of the output signal of the video integrator next in order.

The invention will now be described with reference to the accompanying figures, of which:

Figs. 1A—1D illustrate four television pictures obtained from standardised video signals of one and the same object, but using different thresholds increasing in value;

Fig. 2 illustrates an embodiment of a threshold selection circuit according to the invention;

Fig. 3 illustrates a television picture composed of quantised video signals with contrast gradation; and

Fig. 4 illustrates a circuit that, utilising the standardised video signals of the threshold selection circuit, generates control signals to obtain the quantised video signals for the picture of Fig. 3.

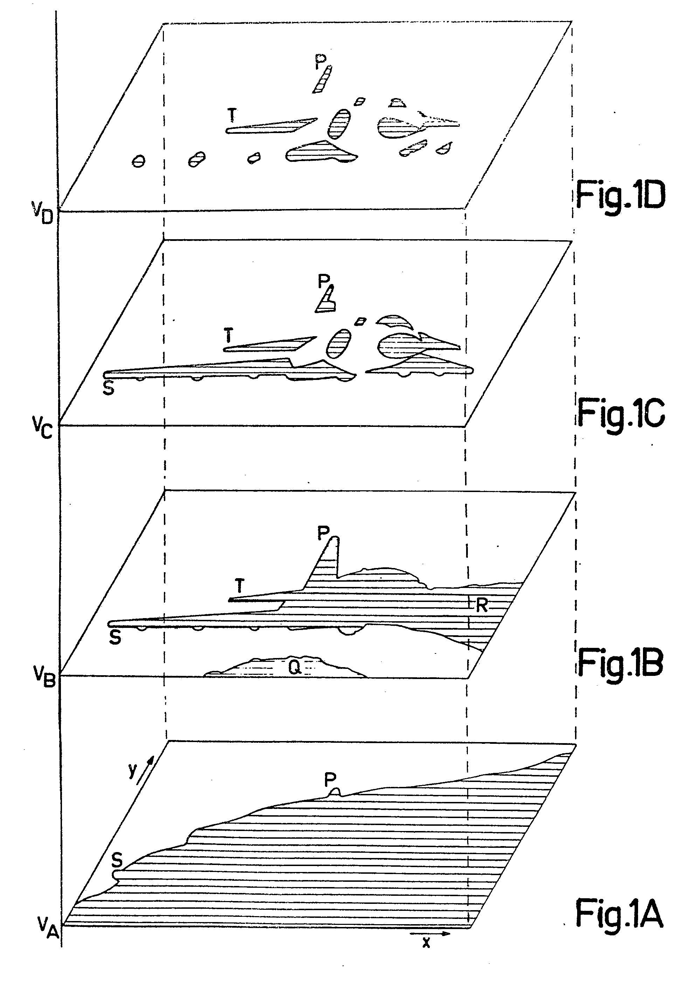

Figs. 1A—1D show four television pictures obtained from standardised video signals of an aircraft flying in clouds. These pictures are distinguished by using a different threshold for each picture when quantising the video signals. In a preferred embodiment of the threshold selection circuit a constant difference factor is maintained between the successive thresholds. It should further be noted that in this description a video signal will be regarded as a stronger signal as the signal originates from a darker shaded section in the object field. Because strong video signals cause associated picture line segments to light up, a negative picture is in fact generated. Since black lines are used to display the picture line segments of Figs. 1A—1D on the television screen, it is still achieved that dark-shaded sections of the television screen correspond with dark-shaded sections in the object field. A weak video signal, which originates from a bright part of the object field, is eliminated only if the amplitude of this video signal is below the selected threshold level. For example, in establishing Fig. 1A, where a low threshold level $V_A$ is applied, only the weak video signals from the very bright part of the sky above the erratic diagonal line are suppressed. The remaining video signals are fed in standardised form to the television screen. In the picture of Fig. 1A little is noticeable of anything that looks like an aircraft. Even at point P, near the centre of the erratic diagonal line, the outlines of something that later will appear to be the tail of the aircraft is hardly distinguishable. Hence, this picture is not suitable to supply any information on dimensions and shape of the aircraft.

In Fig. 1B, where a higher threshold level $V_B$ is applied, the video signal strength is above the selected threshold. Besides the bright part indicated in Fig. 1A, the picture of Fig. 1B also lacks some less bright parts of the object field, such as the cloud banks below the erratic diagonal line (see Fig. 1A); only the lower and the right-hand sides of the screen still show two dark cloud formations Q and R. The shape of the aircraft comes into greater prominence where, in addition to the tail P, also the right-hand side wing S and the tail plane T of the aircraft are recognisable. The other side of the aircraft is however obscured by the cloud bank R.

In Fig. 1C, where a still high threshold level $V_C$ is employed, it is seen that the cloud banks Q and R have fully disappeared; however, also the brighter parts of the aircraft, such as the major part of the tail and the rear part of the fuselage are no longer visible on the screen.

In Fig. 1D with threshold level $V_D$, only the darkest parts of the aircraft are left; the remaining video signals from the aircraft have been eliminated because of their low strength.

In tracking an aircraft with a television camera it is tried to keep the centroid of the aircraft picture area at the screen centre as well as possible. With a clear sky the threshold setting need not be critical; the number of video signals required to obtain a picture on the screen is thereby unaffected. Hence, the centroid of the aircraft picture on the television screen remains unchanged.

With 'the aircraft flying in clouds, a different situation arises. A correct threshold setting enables to utilise the largest possible number of video signals from the aircraft with a minimum number of video signals from the clouds in order to determine the centroid of the aircraft picture on the television screen. An exposition of the problems encountered in finding a suitable threshold level, as well as a solution thereto, is given in the following.

The above description already put forward that the threshold level $V_A$, which resulted in the picture of Fig. 1A, is less suitable for obtaining information on the object or aircraft on the screen. The threshold levels $V_B$, $V_C$ and $V_D$, which produced the pictures of Figs. 1B, 1C and 1D, lend themselves much better for this purpose, where threshold $V_C$ is slightly preferable to the others.

It is accordingly an object of the present invention to provide a circuit that enables to select the best suitable threshold level for optimal processing of the video signals obtained with the television camera. The principles that form the basis of such a circuit will now be described with reference to Figs. 1A—1D. The television pictures obtained with the threshold levels $V_A$—$V_D$ are utilised to establish the area of the picture displayed, the so-called video area. Then, wherever possible, the value of each of the video areas is compared with a fixed fraction of the adjacent video area produced by the next lower threshold level.

For the preferred embodiment here depicted the fixed fraction has a value of $\frac{1}{2}$. As threshold level for a processing unit connected to the above-mentioned circuit, the highest threshold, pertaining to a video area which does not exceed the fixed fraction of the video area pertaining to the lower threshold, is selected and assigned as such.

Suppose the quoted ratio between the video areas of the pictures in 1A—1D is as $32:12:5:3$. Hence, the video area of the picture in Fig. 1D is greater than half of the video area of the picture in Fig. 1C. The latter video area is smaller than half of the video area of the picture in Fig. 1B. Therefore, the threshold level $V_C$ should be selected and assigned to a processing unit connected to the threshold selection circuit. Such a selection procedure should be performed as frequently as possible.

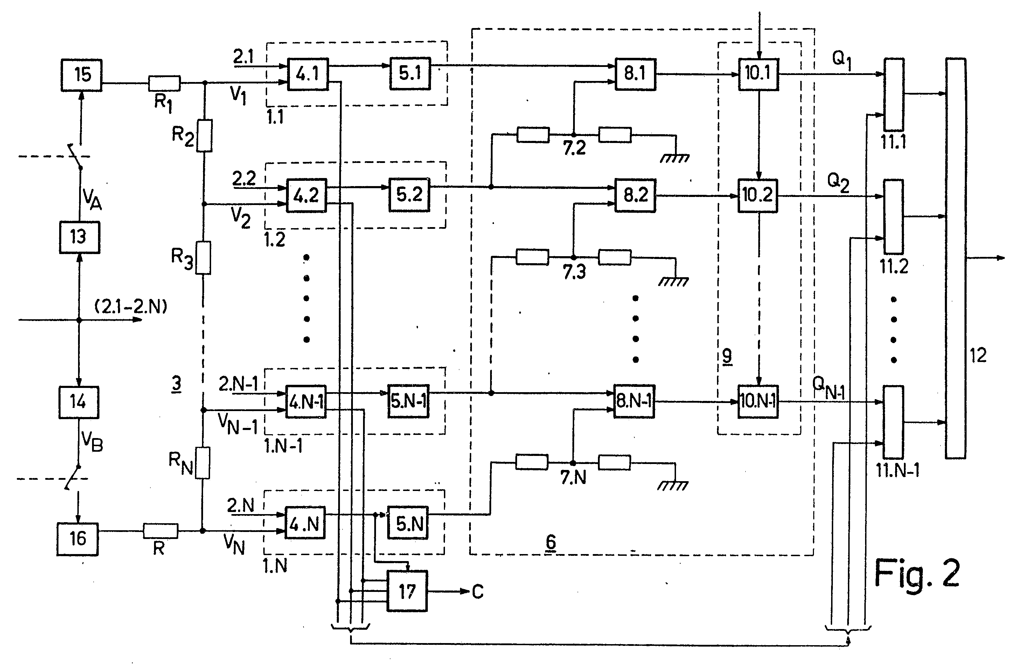

A threshold selection circuit based on the above principles is illustrated in Fig. 2. This threshold selection circuit comprises a number (N) of video integrators 1.1—1.N, which receive the video signals via inputs 2.1—2.N. Through a second input each video integrator 2.i, where $i = 1, \ldots, N$, also receives a threshold $V_i$. These thresholds $V_1$—$V_N$ may be derived from a voltage divider 3, formed by resistances $R_1$—$R_N$. The values of resistances $R_1$—$R_N$ are so chosen that they produce the desired threshold levels $V_1$—$V_N$.

In the preferred embodiment of the threshold selection circuit the video integrator 1.i comprises a combination of a comparator 4.i and, connected thereto, an integrator circuit 5.i. In comparator 4.i the applied video signals are compared with the corresponding threshold level $V_i$; in case a video signal exceeds the threshold level, a so-called standard pulse — standardised in amplitude — is delivered to the integrator circuit 5.i. The delivery of such standard pulses to integrator circuit 5.i results in an output voltage which is a measure for the size of the video area determined by the standard pulses. The output signals of each of the video integrators are subsequently applied to a weighting network 6, which selects the video integrator operating with the highest possible threshold level, where the output voltage representing the video area does not exceed a fixed fraction (a half in this case) of the output voltage of the video integrator operating with the next lower threshold level.

In the preferred embodiment the weighting network 6 comprises a number of voltage dividers 7.2—7.N, a number of comparators 8.1—8.N − 1 and a priority selection circuit 9. The comparator 8.k, where $k = 1, \ldots, N − 1$, receives both the output voltage of the corresponding video integrator 1.k and the above-mentioned fixed fraction of the output voltage of integrator 1.k + 1, as supplied by voltage divider 7.k + 1.

In the preferred embodiment of the threshold selection circuit the two resistances in the voltage divider 7.k + 1 are of equal value. The output voltage of the video integrator 1.k and the tapped voltage of the divider 7.k + 1 are fed to comparator 8.k, which produces a logically true signal only if the output voltage of video integrator 1.k does not exceed the tapped voltage of divider 7.k + 1. Since only N − 1 voltage comparisons can be made, the number of comparators is equal to N − 1.

The priority selection circuit 9, connected to comparators 8.1—8.N − 1, examines the logical output voltages of these comparators in succession, starting with the output voltage of comparator 8.1.

A preferred embodiment of such a priority selection circuit 9 is obtained by means of logical memory elements 10.1—10.N − 1, such as flip-flop circuits. Priority selection circuit 9 contains a number of outputs $Q_1$—$Q_{N-1}$. The truth table of an output $Q_k$ is given by the Boolean logical formula:

$$Q_k = D_k \cdot \prod_{x=1}^{k-1} \cdot \overline{D}_x = D_k \cdot \overline{D}_1 \cdot \overline{D}_2 \cdot \ldots \cdot \overline{D}_{k-1}$$

where $D_k$ and $D_x$ represent the output signal of comparators 8.k and 8.x, respectively. Priority selection circuit 9 permits the selection of the video integrator with the highest possible threshold, of which video integrator the output voltage does not exceed the fixed fraction of the output voltage of the next higher video integrator operating with the next lower threshold. The associated threshold level is then selected as well, whereby the video signals are processed during a subsequent period T. Further, a new selection procedure is initiated to obtain a new threshold for the subsequent period T. This period may for instance comprise a complete frame period, i.e. the time duration for the coverage of a single television picture.

The preferred embodiment here depicted needs no additional comparator circuit for the processing of video signals exceeding the selected threshold, as the comparator of the video integrator, of which the threshold level is also the selected value, already produces the required standardised video signals. An advantageous embodiment of a threshold selection circuit is therefore obtained if this circuit is provided with a number of gate circuits 11.1—11.N − 1 and an OR circuit 12 connected to these gate circuits. Gate circuits 11.1—11.N − 1 are supplied with the output signals of the corresponding comparators 4.1—4.N − 1. By driving each gate circuit 11.k with the corresponding output signal $Q_k$ of the priority selection circuit 9, only the standardised video signals from the comparator of the selected video integrator will appear at the output of OR gate 12.

Instead of voltage divider 3, which is capable of producing a wide range of thresholds from low to high, it is also possible to use a voltage divider for a limited voltage range, within which the threshold level to be selected may definitely be expected.

To realise such a design of a voltage divider 3 a peak value detector 13 and a mean value detector 14 can be used to advantage. Peak value detector 13 registers the peak value of the video signals to be supplied during a period T and at the end of this period produces a voltage $V_A$, representing the peak value, for application to an emitter follower 15. On the other hand, mean value detector 14 registers the mean value of the incoming video signals and, at the end of period T, produces a voltage $V_B$, representing the mean value, for application to an emitter follower 16. The outputs of emitter followers 15 and 16 are connected to the voltage divider 3, across which the voltage difference $V_A$—$V_B$ is impressed.

It is of advantage to insert a resistance R between emitter follower 16 and resistance $R_N$ of voltage divider 3. Resistance R should be greater than each of the resistances $R_1$—$R_N$ of voltage divider 3. This will prevent that with a rapid change in intensity a greater amount of noise signals, clutter signals and other weak video signals than is usual contribute to the video areas determined by the video integrator, since the threshold level of the video integrators will not vary simultaneously with the intensity change. In such a case, the threshold selection procedure may be impaired, with the result that for example the centroid of the television picture is wrongly established.

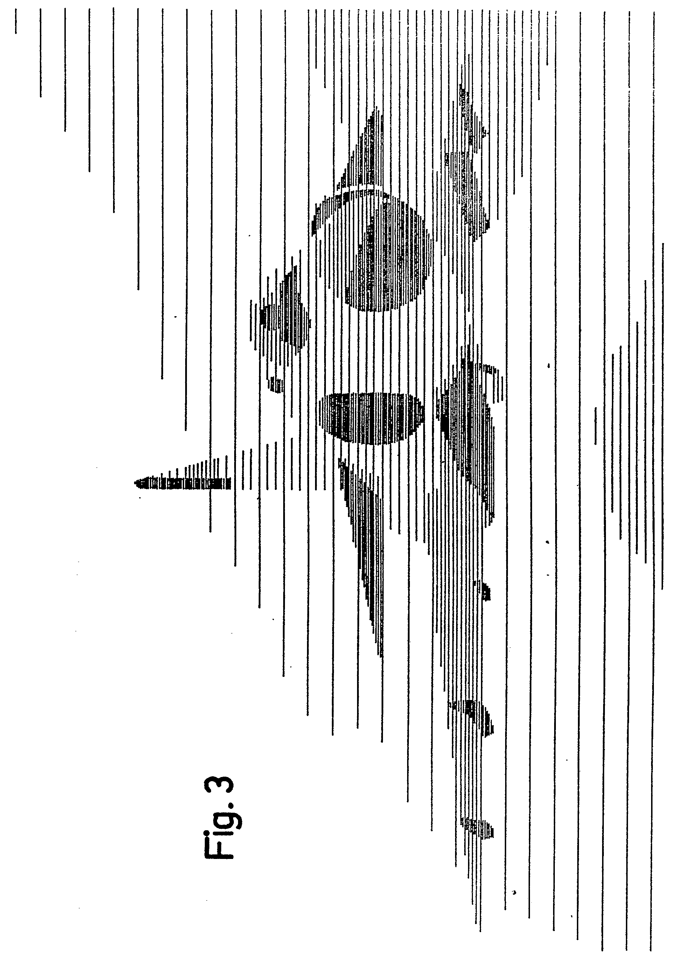

Using a so-called voltage combination circuit 17, it is possible to derive a control signal C with brightness data for the television display from standardised video signals which appear simultaneously at the outputs of several video integrators. Such control signals can be utilised to produce a digitised video picture (see Fig. 3). Instead of the circuits of the type that sum or otherwise combine the simultaneously appearing standardised video signals of several video integrators to form a control signal determining the display brightness, there are also circuits of the type that make the amplitude of the output signal dependent upon the standardised video signal obtained with the highest possible threshold level, that is from the video integrator with the lowest possible index.

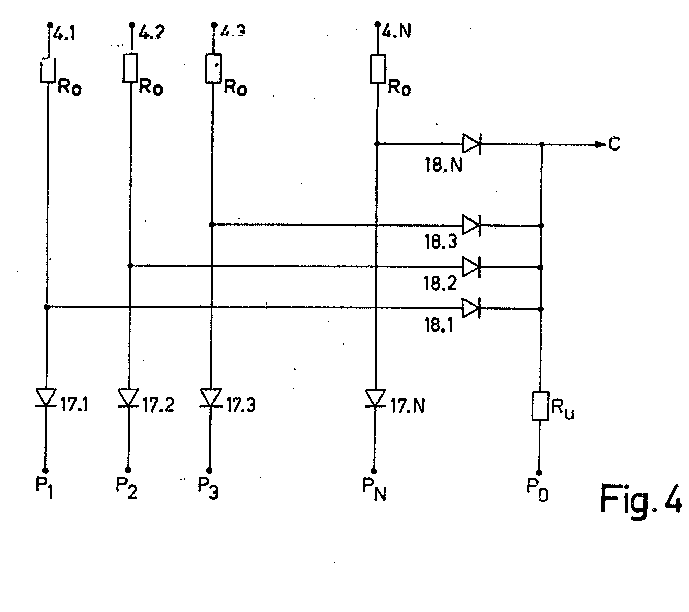

An example of the latter circuit type is given in Fig. 4. This circuit comprises a first series of diodes 17.1—17.N and a second series of diodes 18.1—18.N, where the anodes of the diodes in the different series but with the same index are interconnected.

Further the cathodes of diodes 17.1—17.N are separately connected to bias voltages $P_1$—$P_N$ respectively, where $P_1 > P_2 > \cdots > P_N$, while the cathodes of diodes 18.1—18.N are interconnected and biassed, via a resistance $R_u$, by a voltage $P_0$, where $P_0 < P_N$. The line between the anodes of two identically indexed diodes (17.i, 18.i) is connected to the output of the comparator with a corresponding index (4.i). Thus the common cathode line C of diodes 18.1—18.N will be energised by a voltage derived from the bias voltage of which the index corresponds with that of the highest possible threshold, which still produces a standardised video signal.

**Claims**

1. Threshold selection circuit suitable for a processing unit for the processing of video signals obtained from an angle tracking device, characterised in that said threshold selection circuit is provided with a number (N) of video integrators (1.1—1.N), which are fed with video signals and which are each active above a respective threshold level, said threshold levels sequentially decreasing in magnitude between integrators (1.1—1.N), and with a weighting network (6), connected to the video integrators (1.1—1.N), for selecting and assigning, for the processing unit, the threshold of the video integrator of which the output signal does not exceed a fixed fraction of the output signal of the video integrator operating with the next lower magnitude threshold.

2. Threshold selection circuit as claimed in claim 1, characterised in that said weighting network is provided with $N-1$ comparators, connected directly to the first $N-1$ video integrators and fed with said fixed fraction of the output signal of the video integrator with the next higher index number, and with a priority selection circuit, connected to said comparators, for selecting the comparator with the lowest index number, whereby the output signals of the relevant video integrator does not exceed said fixed fraction of the output signal also applied to the comparator.

3. Threshold selection circuit as claimed in claim 1, characterised in that each of said video integrators is provided with a comparator, which is supplied with video signals and which is active above the relevant threshold level, and with an integrator connected to said comparator.

4. Processing unit for the processing of video signals obtained from an angle tracking device, which processing unit comprises a threshold selection circuit as claimed in claim 3, characterised in that said processing unit is provided with $N-1$ gate circuits, connected separately to the first $N-1$ comparators and controlled by said weighting circuit, which weighting circuit activates that gate circuit which is connected to the video integrator with the selected and assigned threshold level.

5. Threshold selection circuit as claimed in claim 1, characterised in that the threshold selection circuit comprises a voltage divider, inserted between two potentials, for deriving said thresholds.

6. Threshold selection circuit as claimed in claim 5, characterised in that the threshold selection circuit comprises a peak value detector, supplied with video signals, for generating the greater of the two potentials.

7. Threshold selection circuit as claimed in claim 5, characterised in that the threshold selection circuit comprises a mean value detector, supplied with video signals, for generating the smaller of the two potentials.

8. Threshold selection circuit as claimed in claim 7, where said mean value detector functions as an integrating network, characterised in that the threshold selection circuit comprises a gradient control for adapting step by step the video signals, to be applied to the mean value detector, to the video gate size.

9. Threshold selection circuit as claimed in claim 5, characterised in that said voltage divider comprises a plurality of similar resistances.

10. Threshold selection circuit as claimed in claim 9, characterised in that said voltage divider comprises a resistance connected to the smaller of the two potentials, which resistance is greater than the remaining resistances.

11. Processing unit for the processing of video signals obtained from an angle tracking device, which processing unit comprises a threshold selection circuit as claimed in claim 1, characterised in that the processing unit is provided with a comparator, connected to the weighting network, for comparing video signals with the threshold selected and assigned by the weighting network.

12. Processing unit for the processing of video signals obtained from an angle tracking device, which processing unit comprises a threshold selection circuit as claimed in claim 1, characterised in that the processing unit is provided with a centroid measuring circuit which is active above the threshold level of said processing unit.

13. Video monitor for the processing of video signals obtained from an angle tracking device, which monitor is thereto provided with a threshold selection circuit as claimed in claim 3, characterised in that the brightness circuit of the video monitor comprises a voltage combination circuit connected to the comparators of the video integrators.

**Patentansprüche**

1. Schwellenwert-Selektionsschaltung für eine Einrichtung zur Verarbeitung von Videosignalen, erhalten von einer Winkelfolgeeinheit, dadurch gekennzeichnet, dass vorgenannte Schwellenwert-Selektionsschaltung mit einer Anzahl (N) von Videointegratoren (1.1—1.N) versehen ist, die mit Videosignalen gespeist werden, wobei jeder einzelne Videointegrator oberhalb bestimmter Schwellenspannungswerte wirksam wird und die Werte in der Reihenfolge der Integratorenbezeichnung (1.1—1.N) abnehmen und welche Einrichtung weiter versehen ist mit einer mit den Videointegratoren (1.1—1.N) verbundenen Bewertungsschaltung (6) zwecks Selektieren und Anweisen derjenigen Schwellenspannung des Videointegrators, dessen Ausganssignal einen bestimmten Teil des Ausgangssignals des mit der nächst niedrigeren Schwellenspannung arbeitenden Videointegrators nicht überschreitet, als Schwellenspannung für genannte Einrichtung.

2. Schwellenwert-Selektionsschaltung nach Anspruch 1, dadurch gekennzeichnet, dass genannte Bewertungsschaltung mit $N-1$ Komparatoren versehen ist, die direkt mit den mit $N-1$ niedrigst bezeichneten Videointegratoren verbunden sind und wobei jeder Komparator mit dem bestimmten Teil des Ausgangssignals des mit der nächst höheren Indexbezeichnung versehenen Videointegrators gespeist wird, und welche Bewertungsschaltung mit einem mit den genannten Komparatoren verbundenen Prioritätsselektionskreis verbunden ist, zwecks Selektieren des Komparators mit der niedrigsten Indexbezeichnung, wobei die Ausgangssignale des betreffenden Videointegrators den genannten bestimmten Teil des dem Komparator ebenfalls zugeführten Ausgangssignals nicht überschreitet.

3. Schwellenwert-Selektionsschaltung nach Anspruch 1, dadurch gekennzeichnet, dass jeder der genannten Videointegratoren versehen ist mit einem mit Videosignalen zu speisenden und oberhalb der betreffenden Schwellenspannung wirksamen Komparator und einer mit diesem Komparator verbundenen Integratorschaltung.

4. Einrichtung für das Verarbeiten von mit Hilfe eines Winkelfolgegerätes erhaltenen Videosignalen, welche Einrichtung mit einer Schwellenwert-Selektionsschaltung nach Anspruch 3 versehen ist, dadurch gekennzeichnet, dass diese Einrichtung versehen is mit N − 1 Torschaltungen, die getrennt verbunden sind mit den mit N − 1 niedrigst bezeichneten Komparatoren und gesteuert werden von genannter Bewertungsschaltung, welche Bewertungsschaltung diejenige Torschaltung aktiviert, die mit dem Videointegrator verbunden ist, der das selektierte bestimmte Schwellenwertniveau besitzt.

5. Schwellenwert-Selektionsschaltung nach Anspruch 1, dadurch gekennzeichnet, dass die Schwellenwert-Selektionsschaltung zum Erhalt der genannten Schwellenspannungen mit einem zwischen zwei Potentialen angebrachten Spannungsteiler versehen ist.

6. Schwellenwert-Selektionsschaltung nach Anspruch 5, dadurch gekennzeichnet, dass die Schwellenwert-Selektionsschaltung zum Erhalt der höchsten der beiden Potentiale mit einem Spitzenwertdetektor versehen ist, der mit Videosignalen gespeist wird.

7. Schwellenwert-Selektionsschaltung nach Anspruch 5, dadurch gekennzeichnet, dass die Schwellenwert-Selektionsschaltung zum Erhalt der niedrigsten der beiden Potentiale mit einem Mittelwertdetektor versehen ist, der mit Videosignalen gespeist wird.

8. Schwellenwert-Selektionsschaltung nach Anspruch 7, wobei genannter Mittelwertdetektor als Integratorschaltung ausgeführt ist, dadurch gekennzeichnet, dass die Schwellenwertselektionsschaltung einen Gradientregler besitzt für das stufenweise anpassen des dem Mittelwertdetektor zuzuführenden Videosignals an die Videotorgrösse.

9. Schwellenwert-Selektionsschaltung nach Anspruch 5, dadurch gekennzeichnet, dass genannter Spannungsteiler eine Anzahl von gleichen Widerständen besitzt.

10. Schwellenwert-Selektionsschaltung nach Anspruch 9, dadurch gekennzeichnet, dass genannter Spannungsteiler einen mit dem niedrigsten Potential verbundenen Widerstand besitzt, der einen grösseren Wert als die übrigen Widerstände aufweist.

11. Einrichtung für das Verarbeiten von mit Hilfe eines Winkelfolgegerätes erhaltenen Videosignalen, welche Einrichtung mit einer Schwellenwert-Selektionsschaltung nach Anspruch 1 versehen ist, dadurch gekennzeichnet, das genannte Einrichtung einen mit der Bewertungsschaltung verbundenen Komparator für das Vergleichen der Videosignale mit dem durch die Bewertungsschaltung selektierten und bestimmten Schwellenwert aufweist.

12. Einrichtung für das Verarbeiten von mit Hilfe eines Winkelfolgegerätes erhaltenen Videosignalen, welche Einrichtung mit einer Schwellenwert-Selektionsschaltung nach Anspruch 1 versehen ist, dadurch gekennzeichnet, dass die Einrichtung einen Schwerpunktbestimmungskreis aufweist, der oberhalb des Schwellenwertes der genannten Einrichtung wirksam ist.

13. Videomonitor für die Darstellung von mittels eines Winkelfolgegerätes erhaltenen Videosignalen, welcher Monitor dafür mit einer Schwellenwert-Selektionsschaltung nach Anspruch 3 versehen ist, dadurch gekennzeichnet, dass der Helligkeitskreis des Monitors eine Schaltung zum Kombinieren der Ausgangs-signale der Komparatoren der Video-integratoren für die Helligkeitssteuerung besitzt.

**Revendications**

1. Circuit de sélection de seuil approprié à un ensemble de traitement permettant le traitement de signaux vidéo obtenus à partir d'un dispositif de suivi d'angle, caractérisé en ce que ledit circuit de sélection de seuil présente un certain nombre (N) d'intégrateurs vidéo (1.1—1.N), qui reçoivent des signaux vidéo et qui sont actifs chacun au-dessus d'un niveau de seuil déterminée, lesdits niveaux de seuil diminuant séquentiellement de valeur entre les intégrateurs (1.1—1.N), et un réseau de pondération (6), relié aux intégrateurs vidéo (1.1—1.N), de manière à choisir et attribuer, pour l'ensemble de traitement, le seuil de l'intégrateur vidéo dont le signal de sortie ne dépasse pas une fraction fixe du signal de sortie de l'intégrateur vidéo fonctionnant avec le seuil de valeur inférieure suivant.

2. Circuit de sélection de seuil selon la revendication 1, caractérisé en ce que ledit réseau de pondération comprend N − 1 comparateurs, reliés directement aux premiers N − 1 intégrateurs vidéo et recevant ladite fraction fixe du signal de sortie de l'intégrateur vidéo avec l'indice le plus élevé suivant, et un circuit de sélection de priorité, relié auxdits comparateurs, permettant de choisir le comparateur présentant l'indice le plus bas, de sorte que les signaux de sortie de l'intégrateur vidéo en question ne dépassent pas ladite fraction fixe du signal de sortie également appliqué aux comparateurs.

3. Circuit de sélection de seuil selon la revendication 1, caractérisé en ce que chacun desdits intégrateurs vidéo comprend un comparateur, qui reçoit des signaux vidéo et qui est actif au-dessus du niveau de seuil en question, et un intégrateur relié auxdits comparateurs.

4. Ensemble de traitement pour le traitement de signaux vidéo obtenus à partir d'un dispositif de suivi d'angle, lequel ensemble de traitement comprend un circuit de sélection de seuil selon la revendication 3, caractérisé en ce que ledit ensemble de traitement comprend N — 1 circuits à porte, reliés séparément aux premiers N — 1 comparateurs et commandés par ledit circuit de pondération, ledit circuit de pondération actionnant le circuit de porte qui est relié à l'intégrateur vidéo présentant le niveau de seuil choisi et attribué.

5. Circuit de sélection de seuil selon la revendication 1, caractérisé en ce que le circuit de sélection de seuil comprend un diviseur de tension monté entre deux potentiels pour obtenir lesdits seuils.

6. Circuit de sélection de seuil selon la revendication 5, caractérisé en ce que le circuit de sélection de seuil comprend un détecteur de valeur de crête, recevant des signaux vidéo, de manière à générer le plus fort des deux potentiels.

7. Circuit de sélection de seuil selon la revendication 5, caractérisé en ce que le circuit de sélection de seuil comprend un détecteur de valeur moyenne, recevant de signaux vidéo, pour générer le plus faible des deux potentiels.

8. Circuit de sélection de seuil selon la revendication 7, dans lequel ledit détecteur de valeur moyenne fonctionne en tant que réseau d'intégration, caractérisé en ce que le circuit de sélection de seuil comprend une commande de gradient pour adapter pas à pas à la dimension de la porte vidéo les signaux vidéo devant être appliqués au détecteur de valeur moyenne.

9. Circuit de sélection de seuil selon la revendication 5, caractérisé en ce que ledit diviseur de tension comprend plusieurs résistances semblables.

10. Circuit de sélection de seuil selon la revendication 9, caractérisé en ce que le diviseur de tension comprend une résistance reliée au plus faible des deux potentiels, ladite résistance étant plus grande que les résistances restantes.

11. Ensemble de traitement pour le traitement de signaux vidéo obtenus à partir d'un dispositif de suivi d'angle, lequel ensemble de traitement comprend un circuit de sélection de seuil selon la revendication 1, caractérisé en ce que l'ensemble de traitement comprend un comparateur, relié au réseau de pondération, de manière à comparer les signaux vidéo avec le seuil choisi et attribué par le réseau de pondération.

12. Ensemble de traitement pour le traitement de signaux vidéo obtenus à partir d'un dispositif de suivi d'angle, lequel ensemble de traitement comprend un circuit de sélection de seuil selon la revendication 1, caractérisé en ce que l'ensemble de traitement présente un circuit de mesure du centre de gravité qui est actif au-dessus du niveau de seuil dudit ensemble de traitement.

13. Contrôleur vidéo pour le traitement de signaux vidéo obtenus à partir d'un dispositif de suivi d'angle, lequel contrôleur comprend un circuit de sélection de seuil selon la revendication 3, caractérisé en ce que le circuit de brillance du contrôleur vidéo comprend un circuit de combinaison de tension relié aux comparateurs des intégrateurs vidéo.

0 003 852

Fig.1D

Fig.1C

Fig.1B

Fig.1A

1

Fig. 2

0003852

Fig. 3

Fig. 4

0 003 852